# EUROPEAN PATENT SPECIFICATION

(11) **EP 0 465 202 B1**
(45) Date of publication and mention of the grant of the patent: **03.05.1995**
(21) Application number: 91305969.7
(22) Date of filing: 01.07.1991
(51) Int. Cl.: A63D 15/08, F16B 7/18, F16B 35/04

(54) **Snooker cue, and device for securing together snooker cue parts**
Billardstock und Vorrichtung zum Verbinden von Billardstockteilen
Queue de billard et dispositif pour assembler des parties de queue de billard

(30) Priority: 04.07.1990 GB 9014858
(43) Date of publication of application: 08.01.1992
(73) Proprietor: GARRISON LIMITED, Coventry, West Midlands CV5 6AP (GB)
(72) Inventor: Garrison, Dennis Stanley, West Midlands CV5 6AP (GB); Drage, Gary David, West Midlands CV5 8BG (GB)
(74) Representative: Lally, William

(56) References cited:
- DE-A- 3 730 311
- DE-C- 820 657
- GB-A- 2 096 470
- GB-A- 2 128 704
- GB-A- 2 192 800
- GB-A- 2 219 946
- GB-A- 2 222 091
- US-A- 3 586 353

## Description

This invention is concerned with improvements relating to snooker cues. The term "snooker cue" is used herein generically, including cues suitable for use in playing snooker, billiards and pool.

Conventionally snooker cues are provided in two parts, the parts being in use secured together conventionally by the use of a screw-threaded joint. Such a joint is conventionally of cylindrical formation, requiring relative rotation between the cue parts of several turns, to bring the two parts into abutting axial relationship. The two parts have to be screwed together tightly, to provide a stable joint, relying upon the abutment of faces extending at right angles to the longitudinal axis of the cue, and by the inter-engagement of the screw-threaded parts.

For example there is shown in GB-A-2096470 a snooker cue formed in two parts, one part comprising a male portion, the other comprising a female portion. The male portion includes a cylindrical boss and, extending co-axially with the boss, an externally screw-threaded rod, the female portion including a nylon body with an internally screw-threaded bore. In this way, by screwing the threaded rod into the screw-threaded bore, the two cue parts may be screwed together.

In accordance with this invention there is provided a snooker cue comprising two parts, wherein the male formation on one of said parts is provided on a generally frusto-conical surface thereof with a screw-threaded formation, and the female formation provided on the other part may be screw-threadedly engaged by said male formation at locations distributed over a range of radial distances from the axis of the cue.

For example the male formation may be provided by a first connecting member secured to the first cue part and the female formation provided by a second connecting member secured to the second cue part.

Preferably the first and second connecting members are secured within bores of their respective cue parts, and preferably said frusto-conical surface is afforded by a tapered surface inclined at an acute angle to the longitudinal axis of the cue, having a thread or threads formed thereon.

Preferably engagement between the first and second connecting members brings the tapered surface of the male formation into engagement with the tapered surface of the female formation, providing abutting surfaces which are inclined at an acute angle to the longitudinal axis of the tube.

Preferably the first and second connecting members comprise abutment faces which extend at right angles to the longitudinal axis of their respective cue parts, and wherein engagement between the first and second connecting members brings said abutment faces into engagement.

Preferably the tapered surface lies within the range 25° to 50° to the longitudinal axis, and preferably the helix angle of the thread lies within the range 5° to 20°.

Preferably said first and second connecting members comprise cylindrical portions.

Alternatively or in addition, said male formation may be of stepped frusto-conical form, comprising steps of respective different diameters, on each step there being preferably formed a respective thread adapted to engage a respective part of the female formation.

There will now be given a detailed description, to be read with reference to the accompanying drawings, of two snooker cues which are preferred embodiments of this invention, having been selected for the purposes of illustrating the invention by way of example.

In the accompanying drawings:-
FIGURE 1 is a schematic view of one preferred embodiment, showing the two parts separated; and
FIGURE 2 is a schematic view of the other preferred embodiment showing two parts thereof in a separated condition.

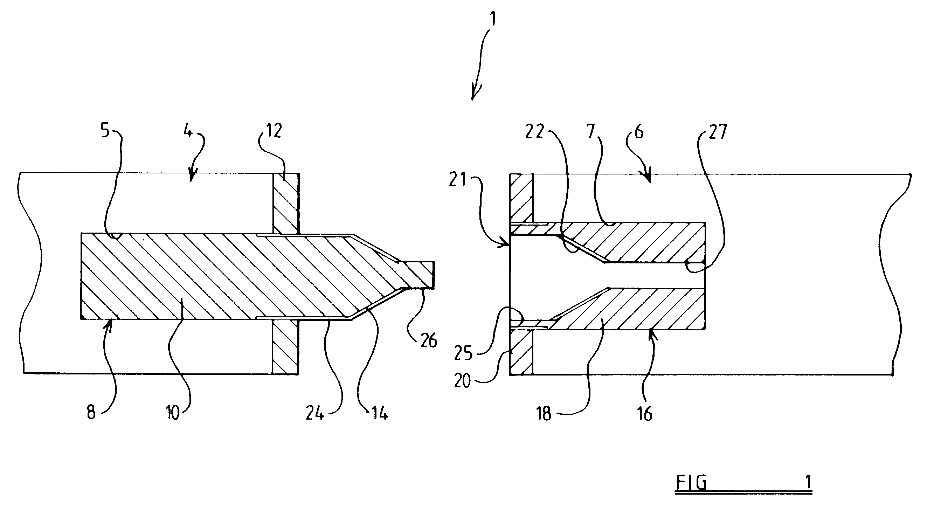

The snooker cue 1 illustrated in Figure 1 which is one preferred embodiment of this invention, comprises two parts 4 and 6, each provided with a generally cylindrical axial cavity 5, 7.

Located in the cavity 5 is a first member 8 of a securing device, said member 8 comprising a cylindrical portion 10 located within the cavity 5, a radial flange 12, and a male formation 14 in the form of a protrusion of generally frusto-conical form, having a taper angle of about 30° to the longitudinal axis.

A second member 16 of the securing device comprises a cylindrical portion 18, and a radial flange 20. Both cylindrical portions 10 and 18 may be longitudinally ribbed to prevent rotation thereof relative to its associated cue part. Preferably the flanges 12 and 20 are located on their respective members 8 and 16 by screw-threaded formations.

Extending into the member 16 is a female formation or cavity 21 comprising a frusto-conical surface 22, complementary to the frusto-conical surface 14, said surfaces 14 and 22 being provided with inter-engaging threaded formations, enabling on insertion of the protrusion 14 into the cavity 21, screw-threaded engagement to take place by relative rotation between the cue parts. Such relative rotation, which typically is limited to between one quarter to two turns, permits the surfaces 14 and 22 to be drawn tightly together, producing additionally face-to-face engagement between the flanges 12 and 20.

If desired, multi-start thread formations may be used.

Preferably additionally the element 8 is provided with a first cylindrical portion 24, having a radius equal to the maximum diameter of the frusto-conical surface 14, and a second portion 26 having a diameter equal to the smallest diameter of the surface 14, which are respectively sliding fits within pilot diameters 25 and 27 of the cavity 21, further assisting in the stability of the joint.

By the use of the securing device above described, two parts of a snooker cue 1 may be joined together in a firm and stable manner suitable for use, more easily than has heretofore been possible, with advantage to snooker players.

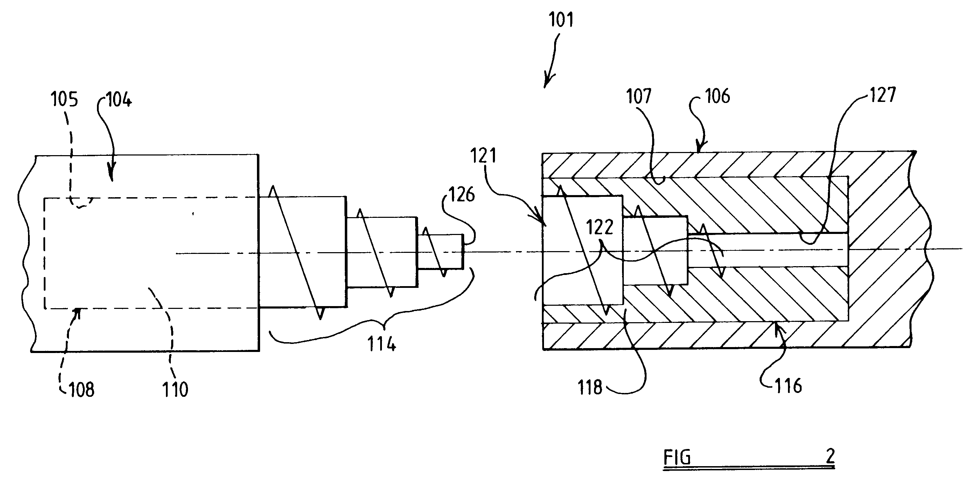

Referring next to Figure 2 of the drawings, the other preferred snooker cue 101 embodying the invention is illustrated in analogous manner to the cue 1 of Figure 1, corresponding components being correspondingly numbered except for the addition of 100, numerically, to each component designation. Flanges corresponding to the flanges 12 and 20 could be incorporated if desired, but are not shown in Figure 2.

The cue 101 differs from the cue 1 in that it incorporates a securing device, afforded by members 108 and 116, wherein screw-threaded engagement between the cue parts is afforded by cooperation of a stepped-conical threaded protrusion 114 of the member 108 with the surface 122 of an at least generally complementarily shaped and threaded female formation or cavity 121 of the member 116. The underlying concept is however the same as in the cue 1, namely that screw-threaded engagement between the cue parts is achieved at locations distributed over a range of radial distance from the axis of the cue.

Said stepped-conical protrusion 114 comprises at least two steps, and in the illustrated embodiment 101 comprises three such steps, each having a respective circumferential surface on which there is formed a respective thread extending in helical manner for fractionally more than one turn around (and along) the step concerned, and adapted to engage a respective threaded formation in the cavity. Said circumferential surfaces basically extend parallel to the longitudinal axis of the cue, but have said threads formed thereon. By providing a protrusion which is still of generally conical format, ease of assemble of the cue is again ensured, and by providing for screw-threaded engagement between the members 108 and 116 at three distinct mutually spaced radial distances from the axis of the cue, exceptional screw-threaded interlock between the parts is achieved, whilst permitting the cue to be assembled and disassembled in exceptionally fast manner. Thus, for a given axial rotation required to assembly the cue, the strength of the joint obtained is increased through providing the protrusion 114 with said threaded formations on a plurality of stepped diameters. By the same token, for a given joint strength, use of such stepped diameters, with threads of suitable pitch, may be utilised to minimise the relative rotation required, between the cue parts, to secure them together.

Additionally it will be appreciated that whereas in each of the above examples the invention has been described above in relation to the securing together of a two part snooker cue, the invention may be utilised with advantage in the securement to the rear end of a snooker cue of a butt extension, whether the cue itself is in one part or two.

The features disclosed in the foregoing description, or the accompanying drawings, or the following claims expressed in their specific forms or in the terms or means for performing the desired function, or a method or process for attaining the disclosed result, may, separately or in any combination of such features, be utilised for realising the invention in diverse forms thereof.

## Claims

1. A snooker cue comprising two parts (4, 6; 104, 106) and means (10, 18; 110, 118) for securing the two parts together, said means comprising a male formation (10; 110) provided on a first of said cue parts (4; 104), said male formation (10; 110) being provided with at least one screw-threaded formation (14; 114) on a generally frusto-conical surface thereof, a female formation (21; 121) being provided on the second of said cue parts (6; 106) which may be screw-threadedly engaged by said male formation (10; 110) at locations distributed over a range of radial distances from the axis of the cue.

2. A snooker cue according to Claim 1 wherein said male formation (10; 110) is provided by a first connecting member (8; 108) secured to the first cue part (4; 104) and the female formation (21; 121) is provided by a second connecting member (16; 116) secured to the second cue part.

3. A snooker cue according to one of Claims 1 and 2 wherein the first and second connecting members (8, 16; 108, 116) are secured within bores (5, 7; 105, 107) of their respective cue parts.

4. A snooker cue according to any one of the preceding claims wherein said frusto-conical surface (14) is afforded by a tapered surface inclined at an acute angle to the longitudinal axis of the cue, having a thread or threads formed thereon.

5. A snooker cue according to Claim 4 wherein engagement between the first and second connecting members (8, 16) brings the tapered surface (14) of the male formation into engagement with the tapered surface (22) of the female formation, providing abutting surfaces which are inclined at an acute angle to the longitudinal axis of the cue.

6. A snooker cue according to any one of the preceding claims wherein the first and second connecting members comprise abutment faces (12, 20) which extend at right angles to the longitudinal axis of their respective cue parts, and wherein engagement between the first and second connecting members brings said abutment faces into engagement.

7. A snooker cue according to any one of the preceding claims wherein the tapered surface lies within the range of 25° to 50° to the longitudinal axis, and wherein the helix angle of the thread lies within the range of 5° to 20°.

8. A snooker cue according to any one of the preceding claims wherein the first and second connecting members comprise cylindrical portions (26, 27).

9. A snooker cue according to any one of Claims 1, 2 and 3 wherein said male formation (108) is of stepped frusto-conical form, comprising at least two steps of respective different diameters.

10. A snooker cue according to Claim 9 wherein on each step there is formed a respective thread adapted to engage a respective part of the female formation (116).

## Patentansprüche

1. Snooker-Stock mit zwei Teilen (4, 6; 104, 106) und Mitteln (10, 18; 110, 118) zum Sichern der zwei Teile miteinander, wobei die Mittel eine männliche Ausbildung (10; 110) umfaßt, die an einem ersten der Stockteile (4; 104) vorgesehen ist, wobei die männliche Ausbildung (10; 110) mit wenigstens einer mit einem Schraubgewinde versehenen Ausbildung (14; 114) auf einer im allgemeinen kegelstumpfförmigen Oberfläche derselben versehen ist, wobei eine weibliche Ausbildung (21; 121) an dem zweiten der Stockteile (6; 106) vorgesehen ist, die von der männlichen Ausbildung (10; 110) an Orten, die über einen Bereich von radialen Entfernungen von der Achse des Stockes verteilt sind, verschraubt eingegriffen werden kann.

2. Snooker-Stock nach Anspruch 1, worin die männliche Ausbildung (10; 110) mit einem ersten Verbindungselement (8; 108) versehen ist, das an dem ersten Stockteil (4; 104) gesichert ist, und die weibliche Ausbildung (21; 121) mit einem zweiten Verbindungselement (16; 116) versehen ist, das an dem zweiten Stockteil gesichert ist.

3. Snooker-Stock nach einem der Ansprüche 1 und 2, worin die ersten und zweiten Verbindungselemente (8, 16; 108, 116) innerhalb von Bohrungen (5, 7; 105, 107) ihrer jeweiligen Stockteile gesichert sind.

4. Snooker-Stock nach irgendeinem der vorangehenden Ansprüche, worin die kegelstumpfförmige Oberfläche (14) durch eine unter einem spitzen Winkel zu der Längsachse des Stockes geneigte, konische Oberfläche mit einem darauf ausgebildeten Gewinde oder mit darauf ausgebildeten Gewinden bereitgestellt wird.

5. Snooker-Stock nach Anspruch 4, worin ein Eingriff zwischen dem ersten und zweiten Verbindungselement (8, 16) die konische Oberfläche (14) der männlichen Ausbildung mit der konischen Oberfläche (22) der weiblichen Ausbildung in Eingriff bringt, was aneinanderstoßende Oberflächen liefert, die unter einem spitzen Winkel zur Längsachse des Stockes geneigt sind.

6. Snooker-Stock nach irgendeinem der vorangehenden Ansprüche, worin das erste und zweite Verbindungselement Gegenlagerflächen (12, 20) umfassen, die sich unter rechten Winkeln zu der Längsachse ihrer jeweiligen Stockteile erstrecken, und worin ein Eingriff zwischen dem ersten und zweiten Verbindungselement die Gegenlagerflächen in Eingriff bringt.

7. Snooker-Stock nach irgendeinem der vorangehenden Ansprüche, worin die konische Oberfläche innerhalb des Bereichs von 25° bis 50° zu der Längsachse liegt, und worin der Steigungswinkel des Gewindes innerhalb des Bereichs von 5° bis 20° liegt.

8. Snooker-Stock nach irgendeinem der vorangehenden Ansprüche, worin das erste und zweite Verbindungselement zylindrische Bereiche (26, 27) umfassen.

9. Snooker-Stock nach irgendeinem der Ansprüche 1, 2 und 3, worin die männliche Ausbildung (108) aus einer stufenartigen kegelstumpfförmigen Form besteht, die wenigstens zwei Stufen mit jeweils unterschiedlichen Durchmessern umfaßt.

10. Snooker-Stock nach Anspruch 9, worin auf jeder Stufe ein jeweiliges Gewinde ausgebildet ist, das zum Eingreifen eines jeweiligen Teils der weiblichen Ausbildung (116) geeignet ist.

## Revendications

1. Queue de billard (snooker) comprenant deux parties (4,6 ; 104, 106) et des moyens (10, 18 ; 110, 118) pour fixer les deux parties ensemble, lesdits moyens comprenant un élément mâle (10, 110) formé sur une première desdites parties de queue (4 ; 104), ledit élément mâle (10 ; 110) étant pourvu d'au moins une formation de filetage de vis (14 ; 114) sur sa surface généralement tronconique, un élément femelle (21 ; 121) étant prévu sur la seconde desdites parties de queue (6 ; 106) laquelle peut venir en prise de filetage avec ledit élément mâle (10 ; 110) en des emplacements répartis sur une certaine plage de distances radiales par rapport à l'axe de la queue.

2. Queue de billard selon la revendication 1, dans laquelle ledit élément mâle (10 ; 110) est pourvu d'un premier élément de connexion (8 ; 108) fixé à la première partie de queue (4 ; 104) et l'élément femelle (21 ; 121) est pourvu d'un second élément de connexion (16 ; 116) fixé sur la seconde partie de queue.

3. Queue de billard selon la revendication 1 ou 2, dans laquelle le premier et le second éléments de connexion (8, 16 ; 108, 116) sont fixés à l'intérieur de trous (5, 7 ; 105, 107) forés dans les parties de queue correspondantes.

4. Queue de billard selon l'une quelconque des revendications précédentes, dans laquelle ladite surface tronconique (14) est formée par une surface en pointe inclinée sous un angle aigu par rapport à l'axe longitudinal de la queue, comportant un ou plusieurs filets formés sur sa périphérie.

5. Queue de billard selon la revendication 4, dans laquelle la prise entre le premier et le second éléments de connexion (8, 16) amène la surface en pointe (14) de l'élément mâle en prise avec la surface en pointe (22) de l'élément femelle, en faisant buter l'une contre l'autre des surfaces qui sont inclinées sous un angle aigu par rapport à l'axe longitudinal de la queue.

6. Queue de billard selon l'une quelconque des revendications précédentes, dans laquelle le premier et le second éléments de connexion comportent des faces de butée (12, 20) qui sont orientées à angles droits par rapport à l'axe longitudinal de leurs parties respectives de queue et dans laquelle la prise entre le premier et le second éléments de connexion amène lesdites faces de butée en prise.

7. Queue de billard selon l'une quelconque des revendications précédentes, dans laquelle la surface en pointe se situe dans la plage faisant un angle de 25° à 50° par rapport à l'axe longitudinal et dans laquelle l'angle de l'hélice des filets se situe dans la plage allant de 5° à 20°.

8. Queue de billard selon l'une quelconque des revendications précédentes, dans laquelle le premier et le second éléments de connexion constituent des parties cylindriques (26, 27).

9. Queue de billard selon l'une quelconque des revendications 1, 2 et 3, dans laquelle ledit élément mâle (108) a la forme d'un tronc de cône avec diamètre variable par palier comprenant au moins deux décrochements de diamètre respective différent.

10. Queue de billard selon la revendication 9, dans laquelle sur chaque décrochement est formé un filet respectif prévu pour venir en prise avec une partie correspondante de l'élément femelle (116).
